# EUROPEAN PATENT SPECIFICATION

(11) **EP 2 574 453 B1**
(45) Date of publication and mention of the grant of the patent: **10.12.2014**
(21) Application number: 11183594.8
(22) Date of filing: 30.09.2011
(51) Int. Cl.: B32B 15/01, C22C 21/02, B23K 1/00, B23K 1/008, B23K 1/20, F28F 1/12, F28F 21/08

(54) **Method for joining an aluminium alloy fin to a steel tube and heat exchanger made therefrom**
Verfahren zur Verbindung einer Aluminiumlegierungslamelle an ein Stahlrohr und daraus hergestellter Wärmetauscher
Procédé pour unir une ailette en alliage d'aluminium à un tuyau d'acier et échangeur thermique fabriqué à partir de celui-ci

(43) Date of publication of application: 03.04.2013
(73) Proprietor: Aleris Aluminium GmbH, 56070 Koblenz (DE)
(72) Inventor: Wittebrood, Andrianus Jacobus, 1991 HB Velserbroek (NL); Kirkham, Steven, 56235 Ransbach-Baumbach (DE); Bürger, Achim, 56203 Höhr Grenzhausen (DE); Vieregge, Klaus, 56237 Nauort (DE)
(74) Representative: Müller Schupfner & Partner Patent- und Rechtsanwaltspartnerschaft mbB

(56) References cited:
- EP-A1- 1 462 207
- WO-A2-01/54840
- US-A1- 2009 095 447

## Description

### FIELD OF THE INVENTION

This invention relates to a method for joining an aluminium alloy rib or fin to a steel tube or pipe. Furthermore, the invention relates to a heat exchanger, in particular for industrial facilities and power plants, which comprises a unit or module produced according to the method.

### BACKGROUND TO THE INVENTION

Heat exchangers of the relevant type typically have, as described, for example, in European patent application EP-1553379-A1, a distributor pipe whose external surface is at least partially provided with cooling ribs. The heat exchange occurs in that a first medium (or fluid) flowing through the pipe and cooling down dissipates its heat into the cooling ribs surrounding the pipe, which have a second medium or fluid, such as coolant air or coolant gas in particular, flowing around them, the heat being discharged to the second medium. As will be immediately apparent to the skilled person, a heat exchange is also possible in the reverse direction.

If the first medium to be cooled is in a gaseous state upon entry into the heat exchanger, depending on the cooling gradient, condensation thereof may be achieved. Therefore, heat exchangers of this type are also used as condensers. In power plants, such condensers are used to condense the exhaust staem of steam turbines.

The pipe is typically a steel pipe. The bond between the steel pipe and aluminium cooling ribs or fins to provide thermal communication is produced in a soldering process or in a brazing process. For this purpose, the steel pipe is provided with an aluminium coating, for example by means of roll bonding, and joined to the aluminium ribs.

European patent application EP-1440759-A discloses a method of production of a heat exchanger with a steel pipe having an aluminium outer layer also and having aluminium ribs joined thereto, for example by spot welding or clinching. The ribs are point fixed to the aluminium outer layer and the heat exchange between the surface and ribs is increased by filling the space between with heat conductive material.

US published patent application no. 2008/0099183-A1 discloses a brazable roll bonded composite metal sheet having a steel core roll bonded to at least one layer of aluminium suitable for making heat exchanger tubes. The steel core is one of an aluminized carbon steel, a galvanized carbon steel, or a steel wire mesh and the aluminium of the outer layer is a brazable aluminium alloy, preferably of the 3003 series aluminium alloys. However, roll bonding of aluminium sheet to steel sheet is a complex and expensive process.

US published patent application no. 2009/0095447 discloses a method for bonding an aluminium rib to a steep pipe, comprising the steps of providing a surface-coated steel pipe, the surface coating having at least 20 wt.% of aluminium, providing an aluminium rib, preferably made from pure aluminium, bringing the surface-coated steel pipe and the aluminium rib into contact and heating the components to a temperature in the range of 470°C to 590°C. The surface-coated steel pipe is made by an Al-Zₙ coating having at least 20 wt.% aluminium and most preferably at least 55 wt.% of aluminium, and whereby the surface coating is only applied to the steel pipe and not to the aluminium rib. The steel tube and the aluminium fins are joined in a soldering process while deploying a flux based on cesium, and preferably based on cesium-aluminium-fluoride (CeAIF).

### DESCRIPTION OF THE INVENTION

It is an object of the invention to provide a method for joining by means of brazing of an aluminium alloy rib or fin to a steel tube or pipe without the need for the use of a flux during the brazing operation.

This and other objects and further advantages are met or exceeded by the present invention providing a method for joining an aluminium rib to a steel tube, comprising the steps of
(a) providing a first component in the form of a steel tube having an inner surface and an outer surface, and wherein at least the outer surface has a surface coating in the form of a braze-promoting layer comprising one or more metals selected from the group comprising nickel, cobalt, and palladium;
(b) providing a second component forming a fin in the form of an aluminium brazing sheet, the aluminium brazing sheet comprising of an aluminium alloy core upon which on at least one side filler alloy is clad, and wherein the filler alloy has a composition comprising, in wt.%:
   Si 5% to 15%,
   Mg 0.03% to 1%,
   one or more elements selected from the group consisting of:
      (Bi 0.02% to 0.5%, Pb 0.03% to 0.4%, and Sb 0.03% to 0.4%, and the sum of these elements being 0.5% or less),
   Fe 0 to about 1%,
   Cu 0 to about 2%,
   Mn 0 to about 1.5%,
   Zn 0 to 1.5%,
   Ti 0 to 0.15%,
   Sr 0 to 0.05%,
   the balance aluminium and incidental impurities;
(c) bringing the first component and the second component into contact to form an assembly of components and whereby the braze-promoting layer is facing the filler alloy clad layer of the brazing sheet;
(d) heating and subsequently holding the assembly of components in an inert gas atmosphere and without applying flux at a brazing temperature in the range between 550°C and 615°C to form a permanent bond occurring on at least one contact point of these components; and
(e) cooling the brazed assembly of components.

### DETAILED DESCRIPTION OF PREFERRED EMBODIMENTS

As will be appreciated herein below, except as otherwise indicated, alloy designations refer to the Aluminum Association designations in Aluminum Standards and Data and the Registration Records, as published by the Aluminum Association in 2011.

For any description of alloy compositions or preferred alloy compositions, all references to percentages are by weight percent unless otherwise indicated. The term "up to" and "up to about", as employed herein, explicitly includes, but is not limited to, the possibility of zero weight-percent of the particular alloying component to which it refers. For example, up to about 0.15% Ti may include an alloy having no Ti.

For the purposes of this invention, and as used hereinafter, the term "controlled atmosphere brazing" or "CAB" refers to a brazing process which utilizes an inert atmosphere, for example, nitrogen, argon or helium in the brazing of metal articles. CAB is distinct from vacuum brazing in particular in that with CAB the brazing atmosphere in the furnace during the brazing operation is at about regular atmospheric pressure, although a slight under-pressure (for example working at a pressure of 0.1 bar or more) or having a slight over-pressure can be used to facilitate the control of the inert atmosphere and to prevent an influx of oxygen containing gas into the brazing furnace.

"Core" means an aluminium alloy which is the structural support for the aluminium alloy that is used as the filler. "Filler" means an aluminium-silicon alloy which is used to braze the core or other aluminium articles to a steel tube. "Cladding" is used to describe the use of the filler when it is overlaid on one or both surfaces of the core, optionally with the application of an intermediate layer between the core and the cladding to act as a diffusion barrier or to improve on the corrosion resistance of the product after brazing. Thereafter, the clad core is called a composite or a brazing sheet. "Fillet" means a concave junction between two surfaces.

The process according to this invention allows for the joining of one or more cooling ribs in the form of aluminium alloy fins to a steel tube. The steel tube is provided on at least its outer-surface with a surface coating in the form of a braze-promoting layer comprising one or more metals selected from the group comprising nickel, cobalt, and palladium, and alloys thereof. The use of the braze-promoting layer in combination with the brazing sheet having the filler alloy of the herein described composition allows for the formation of a very smooth fillet. The braze-promoting layer can be applied onto the steel tube without the further need of an aluminium or aluminium alloy layer clad onto the steel tube, although such an aluminium layer may still be used for certain applications of the steel tube as a heat exchanger tube.

Several other advantages are obtained by the present filler alloy in the controlled atmosphere brazing process. The present invention concerns the joining of a steel tube to aluminium fins using a fluxless brazing process that does not require a vacuum furnace, nor a brazing flux like a fluoride flux (e.g. NOCOLOK^{™}) or cesium-based flux, nor other costly, unique capital equipment. The parts or workpieces are brazed in a furnace containing an inert gas. The preferred incoming gas has about 200 ppm of oxygen or less, and more preferably of 100 ppm of oxygen or less, and most preferably of 25 ppm of oxygen or less. By carefully controlling the amount of Mg and Bi in the filler alloy, both elements are purposively added to the filler alloy, good fillet formation is obtained in the fluxless controlled atmosphere brazing process. As an alternative for adding Bi to the filler alloy, the Bi can be replaced in part or in whole by lead or antimony or in combination. However, Pb and/or Sb are used on a less preferred basis. Ideally only Bi is being added to the filler alloy in the range of 0.03% to about 0.35%. A preferred upper limit is about 0.2%. A preferred lower limit for the Bi addition is 0.06%.

The Mg content in the filler alloy should be carefully controlled and should not exceed 1%. A preferred upper-limit for the Mg addition is 0.50%, more preferably about 0.30%, and most preferably about 0.20%. Typically the Mg is added in an amount of about 0.1% or about 0.08%. At present the quality and control mechanisms when producing aluminium brazing sheet allow for the target and the control of Mg within an accuracy of ±0.01% or better. A too high Mg content in the filler alloy results in an undesirable interaction with any oxygen in the controlled inert gas atmosphere and disrupts the formation of a smooth and acceptable fillet.

The Si content in the filler alloy should be in the range of about 3% to about 15%, and preferably in the range of about 6% to about 13%. For example, the Si content is about 10% or about 12.5%.

The amount of Fe present in the filler alloy depends primarily on the origin of the alloy material and can be up to about 0.6%, and preferably is not more than about 0.4%.

The optional addition of Cu and/or Zn results in lowering the solidus temperature of the filler alloy, whereby the solidus temperature is the onset of melting of the filler alloy.

As grain refiner element Ti can be present in the brazing material in a range of up to about 0.2%, preferably up to 0.15%.

Mn can be present in the filler alloy in a range of 0 to about 1.5%. When present as impurity it can be tolerated to 0.3%. However, it may also be purposively added in a range of 0.3% to 1.5%. A more preferred upper-limit for the Mn addition is 1.0%.

The balance is made by unavoidable or incidental impurities, typically each 0.05% maximum, and the total 0.15% maximum, and aluminium.

In an embodiment of the filler alloy it may further comprise Sr in a range of 0 to 0.05% to modify the silicon in the filler alloy and to improve the flowability of the molten filler in the brazing operation.

The fin material is made from clad fin stock in the form of brazing sheet, the brazing sheet comprises of an aluminium core alloy upon which on at least one side the filler alloy is clad. Preferably the core alloy is made of an aluminium alloy from the 1xxx, 2xxx, 3xxx, 5xxx, 6xxx or 7xxx-series alloys, for example an AA1230, AA3003, AA3004, AA3005, AA6060, AA6063, AA8006, or AA8011-type alloy.

The brazing sheet material used according to this invention can be manufactured via various techniques. For example by means of roll bonding as is well known in the art. Alternatively the filler alloy layer can be applied onto the core alloy layer by means of thermal spraying techniques. Or alternatively the core alloy and the filler alloy clad material can be manufactured by means of casting techniques, for example as disclosed in each of international applications WO-2004/112992, WO-2010/000553, and WO-2010/114740.

In an embodiment the filler alloy forms a clad layer made from a single clad layer, for example as disclosed in international application WO-2010/052231.

In an embodiment the filler alloy forms a clad layer formed by two or more clad layers. Upon melting of the two or more clad layers during the brazing cycle a filler alloy is formed having a chemical composition is herein described. For example as disclosed in each of international applications WO-2008/155067, WO-2010/000666, and WO-2011/034496.

In an embodiment the filler alloy clad layer has an inner-surface and an outer-surface, the inner-surface is facing the core and the outer-surface is devoid of any metallic layer(s) comprising nickel, cobalt, iron, palladium, or alloys thereof. As the steel tube has been provided with a braze-promoting layer there is no requirement to provide such a layer onto the filler alloy layer(s).

The thickness of the braze-promoting layer on the steel tube is typically in a range of 0.05 to about 1.0 microns.

The braze-promoting layer comprising one or more metals selected from the group consisting nickel, cobalt, and palladium, and alloys thereof, e.g. a nickel-lead or nickel-cobalt alloy, can be applied to the outer-surface of the steel forming the steel tube by a method selected from the group consisting of roll bonding, hot dipping, arc spraying, thermal spraying, low temperature kinetic energy metallization, high velocity low pressure coating, electroplating, physical vapour deposition (PVD), chemical vapour deposition (CVD), and application of a powder metal mixture.

The braze-promoting layer can be applied onto a steel tube. Alternatively the braze-promoting layer can be applied onto a steel sheet, e.g. to form a Ni or Ni-alloy coated steel sheet, whereafter the coated steel sheet is formed into e.g. a welded steel tube having at least on its outersurface said braze-promoting layer. Prior to applying the steel sheet with the braze-promoting layer, the steel sheet can be aluminised such that the braze-promoting layer is applied onto the outer-surface of the aluminium layer.

The invention further relates to a heat exchanger tube made from a steel tube having an inner-surface and an outer surface, the outer-surface has a surface coating in the form of a braze-promoting layer comprising one or more metals selected from the group comprising nickel, cobalt, and palladium, and further having one or more aluminium alloy fins joined to outer surface of the steel tube using the method according to the present invention.

Such a heat exchanger tube may have a single row design of cooling fins or a multiple row design of cooling fins, and can be made part as a module of a heat exchanger apparatus, in particular for industrial facilities and power plants.

In another aspect of the invention it relates to the use of a filler alloy having a composition comprising, in wt.%,
Si 5% to 15%,
Mg 0.03% to 1%,
one or more elements selected from the group consisting of:
(Bi 0.02% to 0.5%, Pb 0.03% to 0.4%, and Sb 0.03% to 0.4%, and the sum of these elements being 0.5% or less),
Fe 0 to about 1%,
Cu 0 to about 2%,
Mn 0 to about 1.5%,
Zn 0 to 1.5%,
Ti 0 to 0.15%,
Sr 0 to 0.05%,
the balance aluminium and incidental impurities,
for joining an aluminium alloy fin to an outer surface of a steel tube having a surface coating in the form of a braze-promoting layer comprising one or more metals selected from the group comprising nickel, cobalt, and palladium. Preferably the joining is via brazing at a temperature in the range of 550°C to 615°C and devoid of the use of a flux. And more preferably the brazing is carried out in an inert gas atmosphere.

The following example is provided to further illustrate the objectives and advantages of this invention. It is not intended to limit the scope of this invention in any manner, however.

### EXAMPLE

Brazing sheet materials identical to the material disclosed in WO-2010/000666, Example 1, have been joint very successfully to a commercially available Ni-coated carbon steel via a CAB process using a laboratory scale quartz furnace. The materials were heated under flowing nitrogen of atmospheric pressure and having an oxygen content of less than 20 ppm, with heating from room temperature to 600°C, dwell time at 600°C for 1 minute, cooling from 600°C to room temperature.

A reliable bond had been formed via a very smooth fillet formation.

## Claims

1. Method for joining an aluminium rib to a steel tube, comprising the steps of
(a) providing a first component in the form of a steel tube having an inner surface and an outer surface, and wherein at least the outer surface has a surface coating in the form of a braze-promoting layer comprising one or more metals selected from the group comprising nickel, cobalt, and palladium;
(b) providing a second component forming a fin in the form of an aluminium brazing sheet, the aluminium brazing sheet comprising of an aluminium alloy core upon which on at least one side filler alloy is clad, and wherein the filler alloy has a composition comprising, in wt.%:
Si 5% to 15%,
Mg 0.03% to 1%,
one or more elements selected from the group consisting of:
(Bi 0.02% to 0.5%, Pb 0.03% to 0.4%, and Sb 0.03% to 0.4%, and the sum of these elements being 0.5% or less),
Fe 0 to about 1%,
Cu 0 to about 2%,
Mn 0 to about 1.5%,
Zn 0 to 1.5%,
Ti 0 to 0.15%,
Sr 0 to 0.05%,
the balance aluminium and incidental impurities;
(c) bringing the first component and the second component into contact to form an assembly of components and whereby the braze-promoting layer is facing the filler alloy clad layer of the brazing sheet;
(d) heating and subsequently holding the assembly of components in an inert gas atmosphere and without applying flux at a brazing temperature in the range between 550°C and 615°C to form a permanent bond occurring on at least one contact point of these components; and
(e) cooling the brazed assembly of components.

2. A method according to claim 1, wherein in said filler alloy solely Bi is selected from the group of Bi, Pb, and Sb.

3. A method according to claim 1 or 2, wherein said filler alloy forms a clad layer made from a single clad layer.

4. A method according to claim 1 or 2, wherein said filler alloy forms a clad layer formed by two or more clad layers.

5. A method according to claim 3 or 4, wherein said filler alloy clad layer has an inner-surface and an outer-surface, the inner-surface is facing the core and the outer-surface is devoid of any metallic layer(s) comprising nickel, cobalt, or alloys thereof.

6. A method according to any one of claims 1 to 5, wherein the braze-promoting layer comprises nickel or nickel-alloy.

7. A heat exchanger tube made from a steel tube having an inner-surface and an outer surface, the outer-surface has a surface coating in the form of a braze-promoting layer comprising one or more metals selected from the group comprising nickel, cobalt, and palladium, and further having one or more aluminium alloy fins joined to the outer surface of the steel tube using the method according to any one of claims 1 to 6.

8. Use of a filler alloy having a composition comprising, in wt.%,
Si 5% to 15%,
Mg 0.03% to 1 %,
one or more elements selected from the group consisting of:
(Bi 0.02% to 0.5%, Pb 0.03% to 0.4%, and Sb 0.03% to 0.4%, and the sum of these elements being 0.5% or less),
Fe 0 to about 1%,
Cu 0 to about 2%,
Mn 0 to about 1.5%,
Zn 0 to 1.5%,
Ti 0 to 0.15%,
Sr 0 to 0.05%,
the balance aluminium and incidental impurities,
for joining an aluminium alloy fin to an outer surface of a steel tube having a surface coating in the form of a braze-promoting layer comprising one or more metals selected from the group comprising nickel, cobalt, and palladium.

9. Use of a filler alloy having a composition comprising, in wt.%,
Si 5% to 15%,
Mg 0.03% to 1%,
one or more elements selected from the group consisting of:
(Bi 0.02% to 0.5%, Pb 0.03% to 0.4%, and Sb 0.03% to 0.4%, and the sum of these elements being 0.5% or less),
Fe 0 to about 1%,
Cu 0 to about 2%,
Mn 0 to about 1.5%,
Zn 0 to 1.5%,
Ti 0 to 0.15%,
Sr 0 to 0.05%,
the balance aluminium and incidental impurities,
for joining an aluminium alloy fin to an outer surface of a steel tube having a surface coating in the form of a braze-promoting layer comprising one or more metals selected from the group comprising nickel, cobalt, and palladium, and wherein joining is via brazing at a temperature in the range of 550°C to 615°C and devoid of the use of a flux.

## Patentansprüche

1. Verfahren zur Verbindung einer Aluminiumrippe mit einem Stahlrohr, das die folgenden Schritte umfasst:
(a) Bereitstellen eines ersten Bauteils in Form eines Stahlrohrs mit einer Innenfläche und einer Außenfläche, und wobei mindestens die Außenfläche eine Oberflächenbeschichtung in Form einer das Hartlöten fördernden Schicht hat, die eines oder mehrere Metalle aufweist, die aus der Gruppe ausgewählt sind, die Nickel, Kobalt und Palladium umfasst;
(b) Bereitstellen eines eine Lamelle formenden zweiten Bauteils in Form eines Aluminium-Hartlötblechs, wobei das Aluminium-Hartlötblech aus einem Kern aus Aluminiumlegierung besteht, der auf mindestens einer Seite mit einer Hartlotlegierung plattiert ist, und wobei die Hartlotlegierung eine Zusammensetzung umfasst, die in Gew.-% enthält:
Si 5% bis 15%,
Mg 0,03% bis 1 %,
eines oder mehrere Elemente, die aus der Gruppe ausgewählt sind, bestehend aus:
(Bi 0,02% bis 0,5%, Pb 0,03% bis 0,4%, und Sb 0,03% bis 0,4%, und wobei die Summe dieser Elemente 0,5% oder weniger beträgt),
Fe 0 bis etwa 1 %,
Cu 0 bis etwa 2%,
Mn 0 bis etwa 1,5%,
Zn 0 bis 1,5%,
Ti 0 bis 0,15%,
Sr 0 bis 0,05%,
der Rest Aluminium und zufällige Verunreinigungen;
(c) In Kontakt bringen des ersten Bauteils und des zweiten Bauteils, um einen Zusammenbau von Bauteilen zu formen, und wobei die das Löten fördernde Schicht der mit Hartlotlegierung plattierten Schicht des Hartlötblechs gegenüberliegt;
(d) Erwärmen und anschließendes Halten des Zusammenbaus von Bauteilen in einer Inertgas-Atmosphäre und ohne Anwendung von Flussmittel bei einer Löttemperatur im Bereich zwischen 550°C und 615°C, um eine permanente Verbindung zu formen, die an mindestens einem Kontaktpunkt dieser Bauteile auftritt; und
(e) Kühlen des gelöteten Zusammenbaus von Bauteilen.

2. Verfahren nach Anspruch 1, wobei in der Hartlotlegierung nur Bi aus der Gruppe von Bi, Pb und Sb ausgewählt ist.

3. Verfahren nach Anspruch 1 oder 2, wobei die Hartlotlegierung eine Plattierschicht formt, die aus einer einzigen Plattierschicht besteht.

4. Verfahren nach Anspruch 1 oder 2, wobei die Hartlotlegierung eine Plattierschicht formt, die aus zwei oder mehr Plattierschichten geformt ist.

5. Verfahren nach Anspruch 3 oder 4, wobei die Hartlotlegierung-Plattierschicht eine Innenfläche und eine Außenfläche hat, wobei die Innenfläche dem Kern gegenüberliegt und die Außenfläche keine metallische(n) Schicht(en) aufweist, die Nickel, Kobalt oder Legierungen davon aufweist (aufweisen).

6. Verfahren nach einem der Ansprüche 1 bis 5, wobei die das Löten fördernde Schicht Nickel oder Nickellegierung aufweist.

7. Wärmetauscherrohr aus einem Stahlrohr mit einer Innenfläche und einer Außenfläche, wobei die Außenfläche eine Oberflächenbeschichtung in Form einer das Löten fördernden Schicht hat, die eines oder mehrere Metalle umfasst, die aus der Gruppe ausgewählt sind, die Nickel, Kobalt und Palladium umfasst, und das weiter eine oder mehrere Lamellen aus Aluminiumlegierung hat, die unter Verwendung des Verfahrens nach einem der Ansprüche 1 bis 6 mit der Außenfläche des Stahlrohrs verbunden werden.

8. Verwendung einer Hartlotlegierung mit einer Zusammensetzung, die in Gew.-
% umfasst,
Si 5% bis 15%,
Mg 0,03% bis 1 %,
eines oder mehrere Elemente, die aus der Gruppe ausgewählt sind, bestehend aus:
(Bi 0,02% bis 0,5%, Pb 0,03% bis 0,4%, und Sb 0,03% bis 0,4%, und wobei die Summe dieser Elemente 0,5% oder weniger beträgt),
Fe 0 bis etwa 1 %,
Cu 0 bis etwa 2%,
Mn 0 bis etwa 1,5%,
Zn 0 bis 1,5%,
Ti 0 bis 0,15%,
Sr 0 bis 0,05%,
der Rest Aluminium und zufällige Verunreinigungen,
zur Verbindung einer Lamelle aus Aluminiumlegierung mit einer Außenfläche eines Stahlrohrs, die eine Oberflächenbeschichtung in Form einer das Löten fördernden Schicht hat, die eines oder mehrere Metalle umfasst, die aus der Gruppe ausgewählt sind, die Nickel, Kobalt und Palladium umfasst.

9. Verwendung einer Hartlotlegierung mit einer Zusammensetzung, die in Gew.-% umfasst,
Si 5% bis 15%,
Mg 0,03% bis 1 %,
eines oder mehrere Elemente, die aus der Gruppe ausgewählt sind, bestehend aus:
(Bi 0,02% bis 0,5%, Pb 0,03% bis 0,4%, und Sb 0,03% bis 0,4%, und wobei die Summe dieser Elemente 0,5% oder weniger beträgt),
Fe 0 bis etwa 1 %,
Cu 0 bis etwa 2%,
Mn 0 bis etwa 1,5%,
Zn 0 bis 1,5%,
Ti 0 bis 0,15%,
Sr 0 bis 0,05%,
der Rest Aluminium und zufällige Verunreinigungen,
zur Verbindung einer Lamelle aus Aluminiumlegierung mit einer Außenfläche eines Stahlrohrs, die eine Oberflächenbeschichtung in Form einer das Löten fördernden Schicht hat, die eines oder mehrere Metalle umfasst, die aus der Gruppe ausgewählt sind, die Nickel, Kobalt und Palladium umfasst, und wobei die Verbindung mittels Löten bei einer Temperatur im Bereich von 550°C bis 615°C und ohne die Verwendung eines Flussmittels erfolgt.

## Revendications

1. Procédé pour unir une nervure en aluminium à un tube en acier, comprenant les étapes consistant à
(a) fournir un premier composant sous la forme d'un tube en acier ayant une surface intérieure et une surface extérieure, et dans lequel au moins la surface extérieure a un revêtement de surface sous la forme d'une couche favorisant le brasage, comprenant un ou plusieurs métaux sélectionnés parmi le groupe comprenant nickel, cobalt et palladium ;
(b) fournir un second composant formant une ailette sous la forme d'une tôle de brasage en aluminium, la tôle de brasage en aluminium comprenant un noyau en alliage d'aluminium sur lequel est revêtu un alliage de charge sur au moins un côté, et dans lequel l'alliage de charge a une composition comprenant, en pourcentage en poids :
Si 5 % à 15 %
Mg 0,03 % à 1 %,
un ou plusieurs éléments choisis parmi le groupe comprenant :
(Bi 0,02 % à 0,5 %, Pb 0,03 % à 0,4 %, et Sb 0,03 % à 0,4 %, la somme de ces éléments étant de 0,5 % ou moins),
Fe 0 à environ 1 %
Cu 0 à environ 2 %
Mn 0 à environ 1,5 %
Zn 0 à 1,5 %
Ti 0 à 0,15 %
Sr 0 à 0,05 %
le reste étant de l'aluminium et des impuretés inévitables ;
(c) amener le premier composant et le second composant en contact pour former un assemblage de composants et de telle sorte que la couche favorisant le brasage fait face vers la couche de revêtement en alliage de charge de la tôle de brasage ;
(d) chauffer et maintenir ensuite l'assemblage de composants dans une atmosphère de gaz inerte et sans appliquer de flux à une température de brasage dans la plage entre 550° C et 615° C pour former une jonction permanente qui se produit sur au moins un point de contact de ces composants ; et
(e) faire refroidir l'assemblage de composants brasé.

2. Procédé selon la revendication 1, dans lequel uniquement du Bi est sélectionné dans le groupe Bi, Pb, et Sb dans ledit alliage de charge.

3. Procédé selon la revendication 1 ou 2, dans lequel ledit alliage de charge forme une couche de revêtement constituée d'une unique couche de revêtement.

4. Procédé selon la revendication 1 ou 2, dans lequel ledit alliage de charge forme une couche de revêtement formée par deux ou plusieurs couches de revêtement.

5. Procédé selon la revendication 3 ou 4, dans lequel ladite couche de revêtement en alliage de charge a une surface intérieure et une surface extérieure, la surface intérieure fait face vers le noyau et la surface extérieure est dépourvue de toute couche métallique comprenant du nickel, du cobalt ou leurs alliages.

6. Procédé selon l'une quelconque des revendications 1 à 5, dans lequel la couche favorisant le brasage comprend du nickel ou un alliage au nickel.

7. Échangeur de chaleur réalisée à partir d'un tube en acier ayant une surface intérieure et une surface extérieure, la surface extérieure comporte un revêtement de surface sous la forme d'une couche favorisant le brasage comprenant un ou plusieurs métaux sélectionnés parmi le groupe comprenant nickel, cobalt et palladium, et ayant en outre une ou plusieurs ailettes en alliage d'aluminium réunies à la surface extérieure du tube en acier en utilisant le procédé selon l'une quelconque des revendications 1 à 6.

8. Utilisation d'un alliage de charge ayant une composition comprenant, en pourcentage en poids :
Si 5 % à 15 %
Mg 0,03 % à 1 %,
un ou plusieurs éléments choisis parmi le groupe comprenant :
(Bi 0,02 % à 0,5 %, Pb 0,03 % à 0,4 %, et Sb 0,03 % à 0,4 %, la somme de ces éléments étant de 0,5 % ou moins),
Fe 0 à environ 1 %
Cu 0 à environ 2 %
Mn 0 à environ 1,5 %
Zn 0 à 1,5 %
Ti 0 à 0,15 %
Sr 0 à 0,05 %
pour réunir une ailette en alliage d'aluminium sur une surface extérieure d'un tube en acier ayant un revêtement de surface sous la forme d'une couche favorisant le brasage comprenant un ou plusieurs métaux sélectionnés parmi le groupe comprenant nickel, cobalt et palladium.

9. Utilisation d'un alliage de charge ayant une composition comprenant, en pourcentage en poids :
Si 5 % à 15 %
Mg 0,03 % à 1 %,
un ou plusieurs éléments choisis parmi le groupe comprenant :
(Bi 0,02 % à 0,5 %, Pb 0,03 % à 0,4 %, et Sb 0,03 % à 0,4 %, la somme de ces éléments étant de 0,5 % ou moins),
Fe 0 à environ 1 %
Cu 0 à environ 2 %
Mn 0 à environ 1,5 %
Zn 0 à 1,5 %
Ti 0 à 0,15 %
Sr 0 à 0,05 %
pour réunir une ailette en alliage d'aluminium sur une surface extérieure d'un tube en acier ayant un revêtement de surface sous la forme d'une couche favorisant le brasage comprenant un ou plusieurs métaux sélectionnés parmi le groupe comprenant nickel, cobalt et palladium, et dans lequel la réunion a lieu via un brasage à une température dans la plage de 550° C à 615° C, et dans laquelle il n'y a pas d'utilisation d'un flux.
